# EUROPÄISCHE PATENTSCHRIFT

(11) **EP 0 519 209 B1**
(45) Veröffentlichungstag und Bekanntmachung des Hinweises auf die Patenterteilung: **15.01.1997**
(21) Anmeldenummer: 92108115.4
(22) Anmeldetag: 14.05.1992
(51) Int. Cl.: A01F 29/10

(54) **Einzugsvorrichtung für Feldhäcksler**
Loading device for a forage harvester
Dispositif de chargement pour une rammasseuse-hacheuse

(30) Priorität: 21.06.1991 DE 9107689 U
(43) Veröffentlichungstag der Anmeldung: 23.12.1992
(73) Patentinhaber: CLAAS SAULGAU GMBH, D-88340 Saulgau (DE)
(72) Erfinder: Rauch, Hans, W-7968 Saulgau-Kleintissen (DE)

(56) Entgegenhaltungen:
- CH-A- 293 633
- DE-A- 3 144 917
- DE-C- 1 059 701
- FR-A- 2 231 304
- US-A- 4 044 557

## Beschreibung

Die Neuerung bezieht sich auf eine Einzugsvorrichtung für Feldhäcksler mit in einem Einzugsgehäuse fest gelagerten unteren Einzugswalzen und regelmäßig zwei, an Schwingen höhenbeweglich gelagerten oberen Einzugswalzen, die im Betrieb durch eine oder mehrere Federn nach unten in Richtung auf die unteren Einzugswalzen gedrückt werden wobei zusätzlich zu den auf die Schwingen wirkenden Federn Dämpfungsglieder vorgesehen sind, die die Aufschwingbewegung der oberen Einzugswalzen bremsen (zum Stand der Technik siehe z. B. die DE-OS-31 44 917 oder DE-PS-1059701)

In der Ruhelage werden die oberen Einzugswalzen durch die Federn so weit nach unten gedrückt, daß ihre Umkreise die Umkreise der unteren Einzugswalzen beinahe berühren. Wenn Erntegut in die Einzugsvorrichtung gelangt, werden die oberen Einzugswalzen entgegen der Federwirkung nach oben angehoben. Die Höhe der Anhebung wird durch die Dicke des zugeführten Erntegutpolsters bestimmt. Da diese Dicke in der Praxis recht unterschiedlich ist, bewegen sich die oberen Einzugswalzen in der Regel in schneller Folge nach oben und unten.

Wegen der in den letzten Jahren geforderten und erzielten Leistungssteigerung, die immer höhere Einzugsgeschwindigkeiten für das Erntegut erfordert, stellen sich immer häufiger Eigenschwingungszustände der oberen Einzugswalzen ein, die einen gleichmäßigen Einzug nicht mehr zulassen und dadurch leistungsbegrenzend wirken.

Um diesem Nachteil abzuhelfen wird neuerungsgemäß vorgeschlagen, dem aus den Massen der oberen Einzugswalzen und ihren Schwingen und den Federn bestehendem Schwingungssystem ein zusätzliches Dämpfungsglied zuzuordnen, das eine Abschwingbewegung der oberen Einzugswalzen bremst. Das Dämpfungsglied kann ein hydraulischer Stoßdämpfer sein. Da die Einzugswalzen das Erntegut besonders gut annehmen, wenn sich die oberen Einzugswalzen frei nach oben bewegen können, ist es zweckmäßig, die hydraulischen Stoßdämpfer so auszugestalten, daß sie eine Aufwärtsbewegung der oberen Einzugswalzen fast ungebremst zulassen, während die Abwärtsbewegung stärker gebremst wird. Selbstverständlich können an Stelle der hydraulischen Stoßdämpfer auch mechanische Dämpfungsglieder eingesetzt werden. Es ist auch möglich, durch Änderung der Anlenkpunkte der Dämpfungsglieder oder durch Änderung der Dämpfungscharakteristik je nach der Art des Erntegutes oder der Größe des Durchsatzes unterschiedlich starke Dämpfungen zu erreichen.

In der US-PS 40 44 557 ist eine Ausführung an einer Einzugsvorrichtung für Feldhäcksler beschrieben, die ein Dämpfungsglied aufweist. Dieses Dämpfungsglied ist jedoch dem Stellhebel eines drehzahlveränderlichen Hydraulikmotors zugeordnet, der in Abhängigkeit vom Höhenausschlag der oberen Einzugswalzen die Fördergeschwindigkeit der Einzugsorgane steuert. Eine Dämpfung der oberen Einzugswalzen in ihrer Schwingbewegung nach unten ist bei dieser bekannten Ausführung nicht gegeben und aus der beschriebenen Konstruktion auch nicht herleitbar, so daß auch hier die zuvor zum bekannten Stand der Technik beschriebenen Nachteile vorliegen.

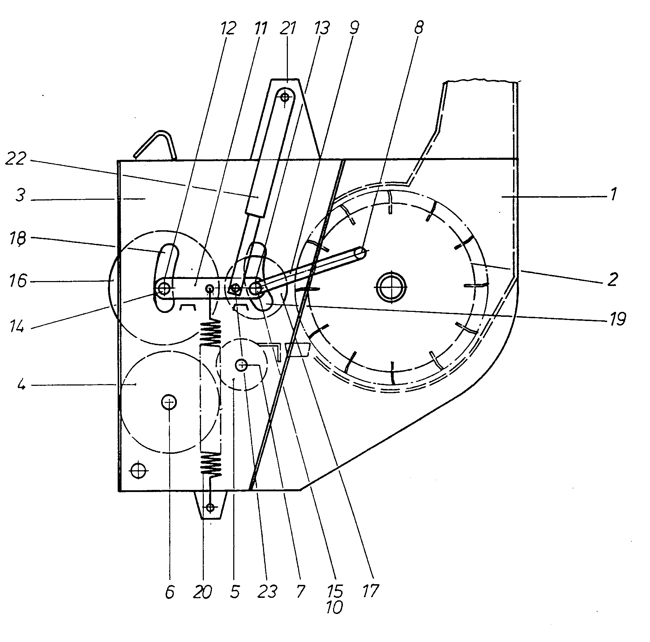

Die Neuerung wird anhand einer Abbildung beispielsweise beschrieben. Die Abbildung zeigt die Einzugsvorrichtung eines Feldhäckslers mit einer Häckseltrommel von der Seite.

An ein Häckslergehäuse (1) mit einer Häckseltrommel (2) ist ein Einzugsgehäuse (3) fest angebaut. In ihm sind untere Einzugswalzen (4) und (5) um Achsen (6) und (7) drehbar gelagert. An Drehpunkten (8) sind beidseits des Einzugsgehäuses (3) Schwingen (9) drehbar gelagert. An deren freiem Ende (10) sind Schwingen (11) ebenfalls drehbar gelagert. Diese haben eine vordere (12) und eine hintere Lagerstelle (13), in denen Wellen (14) bzw. (15) drehbar gelagert sind. Die Wellen (14, 15) tragen obere Einzugswalzen (16, 17). Diese können sich im Bereich von Schlitzen (18, 19), die sich im Einzugsgehäuse (3) befinden, frei nach oben und unten bewegen. Die vorderen Schwingen (11) werden durch Zugfedern (20) nach unten gezogen. An einem Aufsatz (21) des Einzugsgehäuses (3) sind beidseits hydraulische Stoßdämpfer (22) angelenkt, die auf einen Gelenkpunkt (23) an den vorderen und/oder hinteren Schwingen (9, 11) einwirken.

## Patentansprüche

1. Einzugsvorrichtung für Feldhäcksler mit fest gelagerten unteren Einzugswalzen (4, 5) und höhenbeweglich an Schwingen (9, 11) gelagerten oberen Einzugwalzen (16, 17), die im Betrieb durch eine oder mehrere Federn (20) nach unten in Richtung auf die unteren Einzugswalzen (4, 5) gedrückt werden, wobei zusätzlich zu den auf die Schwingen (9, 11) wirkenden Federn (20) Dämpfungsglieder (22) vorgesehen sind, die die Aufschwing-Bewegung der oberen Einzugswalzen (16, 17) bremsen, dadurch gekennzeichnet, daß die Dämpfungsglieder (22) eine Abschwingbewegung der oberen Einzugswalzen (16, 17) bremsen.

2. Einzugsvorrichtung nach Anspruch 1, dadurch gekennzeichnet, daß die Dämpfungsglieder (22) eine Aufschwingbewegung der oberen Einzugswalzen (16, 17) fast ungebremst zulassen, während deren Abschwingbewegung stärker gebremst ist.

3. Einzugsvorrichtung nach Anspruch 1 oder 2, dadurch gekennzeichnet, daß das Dämpfungsglied durch hydraulische Stoßdämpfer (22) gebildet wird.

4. Einzugsvorrichtung nach Anspruch 1 oder 2, dadurch gekennzeichnet, daß das Dämpfungsglied durch mechanische Reibungsbremsen gebildet wird.

5. Einzugsvorrichtung nach einem der Ansprüche 1 bis 4, dadurch gekennzeichnet, daß durch Änderung der Anlenkpunkte (23) der Dämpfungsglieder (22) und/oder durch Änderung der Dämpfungscharakteristik je nach Art des Erntegutes oder der Größe des Durchsatzes unterschiedlich starke Dämpfungen erreicht werden.

## Claims

1. A feed apparatus for a forage harvester comprising fixedly mounted lower feed rollers (4, 5) and upper feed rollers (16, 17) which are mounted movably In respect of height on rocker arms (9, 11) and which in operation are urged downwardly towards the lower feed rollers (4, 5) by one or more springs (20), wherein in addition to the springs (20) acting on the rocker arms (9, 11) there are provided damping members (22) which brake the upward swing movement of the upper feed rollers (16, 17), characterised in that the damping members (22) brake a downward spring movement of the upper feed rollers (16, 17).

2. A feed apparatus according to claim 1 characterised in that the damping members (22) permit an upward swing movement of the upper feed rollers (16, 17) almost without braking while the downward swing movement thereof is more heavily braked.

3. A feed apparatus according to claim 1 or claim 2 characterised in that the damping member is formed by hydraulic shock absorbers (22).

4. A feed apparatus according to claim 1 or claim 2 characterised in that the damping member is formed by mechanical friction brakes.

5. A feed apparatus according to one of claims 1 to 4 characterised in that different strengths of damping are achieved by altering the pivot mounting points (23) of the damping members (22) and/or by altering the damping characteristic in dependence on the respective nature of the crop material or the respective magnitude of the through-put rate.

## Revendications

1. Dispositif de chargement pour une ramasseusehacheuse comportant des cylindres inférieurs de chargement (4,5) montés fixes et des cylindres d'entrée supérieurs (16, 17) montés de manière à être déplaçables en hauteur sur des bras oscillants (9,11) et qui en fonctionnement sont repoussés vers le bas, par un ou plusieurs ressorts (20), en direction des cylindres inférieurs de chargement (4,5), et dans lequel il est prévu, en plus des ressorts (20) agissant sur les bras oscillants (9,11), des organes d'amortissement (22), qui freinent le déplacement ascendant d'oscillation des cylindres supérieurs de chargement (16,17), caractérisé en ce que les organes d'amortissement (22) freinent un déplacement descendant d'oscillation des cylindres supérieurs de chargement (16,17).

2. Dispositif de chargement selon la revendication 1, caractérisé en ce que les organes d'amortissement (22) autorisent, presque sans aucune action de freinage, un déplacement ascendant d'oscillation des cylindres supérieurs de chargement (16,17), tandis que leur déplacement descendant d'oscillation est freiné plus fortement.

3. Dispositif de chargement selon la revendication 1 ou 2, caractérisé en ce que l'organe d'amortissement est formé par des amortisseurs hydrauliques (22).

4. Dispositif de chargement selon la revendication 1 ou 2, caractérisé en ce que l'organe d'amortissement est formé par des freins mécaniques à friction.

5. Dispositif de chargement selon l'une des revendications 1 à 4, caractérisé en ce qu'on obtient des amortissements ayant des intensités différentes par modification des points d'articulation (23) des organes d'amortissement (22) et/ou par modification des caractéristiques d'amortissement en fonction du produit récolté ou de la valeur du débit.
